# EUROPEAN PATENT SPECIFICATION

(11) **EP 3 984 689 B1**
(45) Date of publication and mention of the grant of the patent: **29.07.2026**
(21) Application number: 21179869.9
(22) Date of filing: 16.06.2021
(51) Int. Cl.: B23K 26/08, B23K 26/22

(54) **MACHINE FOR PROVIDING A COMPONENT FOR SPRING RINGS, COMPONENT PROVIDED WITH THE MACHINE AND METHOD FOR PROVIDING IT**
MASCHINE ZUR BEREITSTELLUNG EINES BAUTEILS FÜR FEDERRINGE, MIT DER MASCHINE BEREITGESTELLTES BAUTEIL UND VERFAHREN ZUR BEREITSTELLUNG DAVON
MACHINE PERMETTANT DE FOURNIR UN COMPOSANT POUR DES BAGUES À RESSORT, COMPOSANT FOURNI AVEC LA MACHINE ET PROCÉDÉ POUR LE FOURNIR

(30) Priority: 13.10.2020 IT 202000024043
(43) Date of publication of application: 20.04.2022
(73) Proprietor: Ciemmeo S.r.l., 36065 Mussolente VI (IT)
(72) Inventor: STOCCO, Rino, 36065 Mussolente VI (IT)
(74) Representative: Modiano, Micaela Nadia

(56) References cited:
- WO-A2-2004/108342
- CN-U- 210 587 665
- ES-A1- 2 121 701
- US-A- 4 972 670

## Description

The present invention relates to a machine for providing a component for spring rings, to a component provided with said machine and to a method for providing said component.

The invention lies, particularly but not exclusively, in the field of the production of jewelry and costume jewelry, such as necklaces and bracelets.

In this field, spring rings are widespread, i.e., components used for closing rings and bracelets, constituted by a C-shaped shell with a slot in the outer part, a loop welded to the shell, a helical spring inside the shell and an element, also located inside the shell, which protrudes from the slot with a lever that allows the user to translate the element, pushing it against the spring, in order to open the ring. The spring then pushes the element into its original closing position.

The term shell element is understood here to mean a spring ring blank constituted by the C-shaped shell and by the loop welded thereto.

The shell element is obtained with a series of production steps in a same machine:
- a metallic wire is cut and bent to provide the loop,
- the loop is picked up and moved toward a welding seat and at the same time a C-shaped shell with a slot is picked up from a shell magazine and also moved toward the welding seat,
- the loop and the shell are welded by adding material, which as is known is an alloy with a low melting point.

The two elements can be welded along the same plane of arrangement or along perpendicular planes.

The welding of the two elements leads to a series of drawbacks that so far have not been obviated, such as oxidation in the welding region due to combustion, which therefore requires a subsequent cleaning step, and the forming of waste material, which must be refined before being remelted and reused.

Furthermore, before proceeding with welding, the flame must be adjusted according to the environmental conditions, such as humidity and temperature. Since a certain time is necessary before the machine is completely at temperature, the result of the welding of the first parts is different from the one of the subsequent parts.

Another drawback resides in that welding with added material, as is known, requires not only the material, i.e., the welding alloy, but also complementary equipment, such as the gas cylinder, or generators, adapted maintenance of said equipment, and additional safety systems.

An additional drawback resides in that welding causes thermal distortion to the part, creating problems during assembly with the other components of the spring ring.

Another drawback resides in that with the addition of material the spring ring has a connection portion between the shell and the loop that has a clearly defined border, making the final product uneven.

ES 2 121 701 (basis for the preambles of claims 1 and 8) , CN 210 587665 and US 4 972 670 disclose machines for providing welded components.

The aim of the present invention is to provide a machine for providing a component for spring rings that is able to overcome the drawbacks of the prior art in one or more of the aspects mentioned above.

Within this aim, an object of the invention is to provide a machine for providing a component for spring rings in reduced total times with respect to the ones currently necessary, with even welding in said component and with respect to other similar components produced with the same machine.

Another object of the invention is to provide a component without thermal distortion due to laser welding.

Another object of the invention is to provide a machine with reduced maintenance with respect to the machines in use today.

A further object of the present invention is to overcome the drawbacks of the background art in a manner that is alternative to any existing solutions.

Not least object of the invention is to provide a machine that is highly reliable, relatively easy to provide and at competitive costs.

This aim and these and other objects which will become better apparent hereinafter are achieved by a machine for providing a component for spring rings, as defined in claim 1.

Moreover, the invention also relates to a method for providing the above-mentioned component for spring rings, as defined in claim 8.

Further characteristics and advantages of the invention will become better apparent from the description of a preferred but not exclusive embodiment, of the machine, of the component, and of the method according to the invention, illustrated by way of non-limiting example in the accompanying drawings, wherein:
Figure 1 is a view of a first embodiment of the machine as a whole according to the invention, adapted to provide a first embodiment of the component;
Figure 2 is a view of a second embodiment of the machine according to the invention as in the preceding figure and adapted to provide a second embodiment of the component;
Figure 3 is a view of a portion of the machine according to the invention during a step of the method for providing the component;
Figure 4 is a view of a portion of the machine according to the invention during another step of the method;
Figure 5 is a view of a portion of a machine according to the invention during a further step of the method;
Figure 6 is a view of a portion of the machine according to the invention during yet another step of the method;
Figure 7 is a view of a first embodiment of the component according to the invention;
Figure 8 is a view of a second embodiment of the component according to the invention.

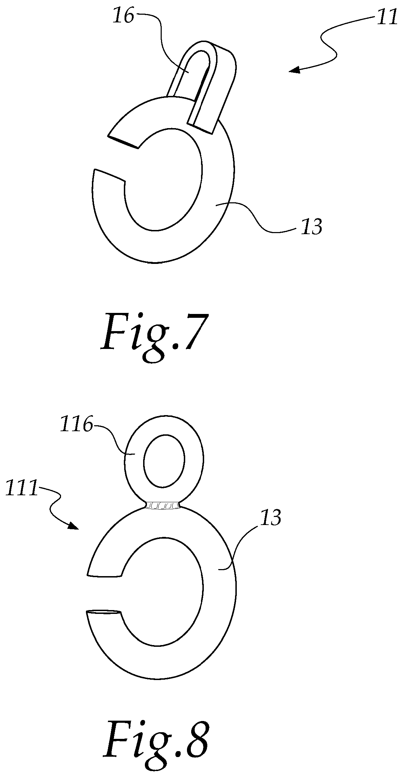

With reference to the figures, the machine according to the invention, generally designated by the reference numerals 10, 110 , allows to provide the component 11, 111 in the two embodiments shown in a simplified manner in Figure 7 and in Figure 8.

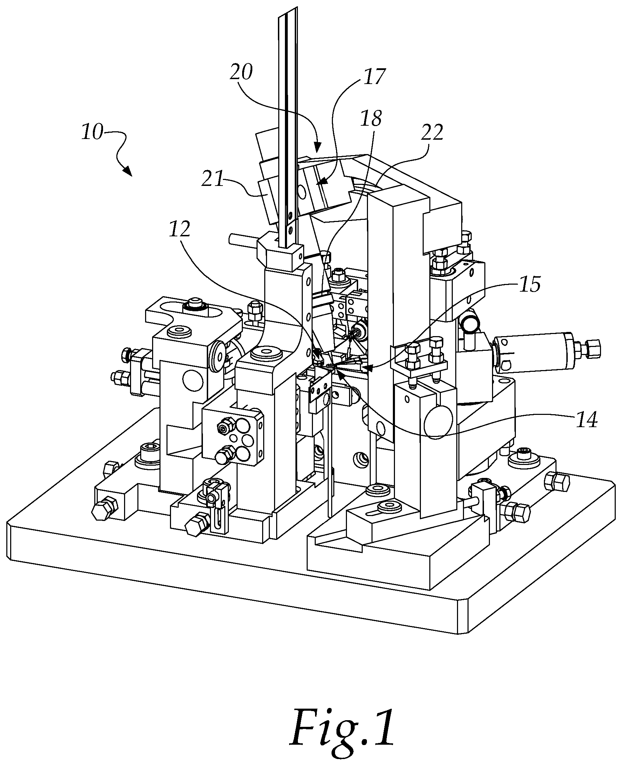

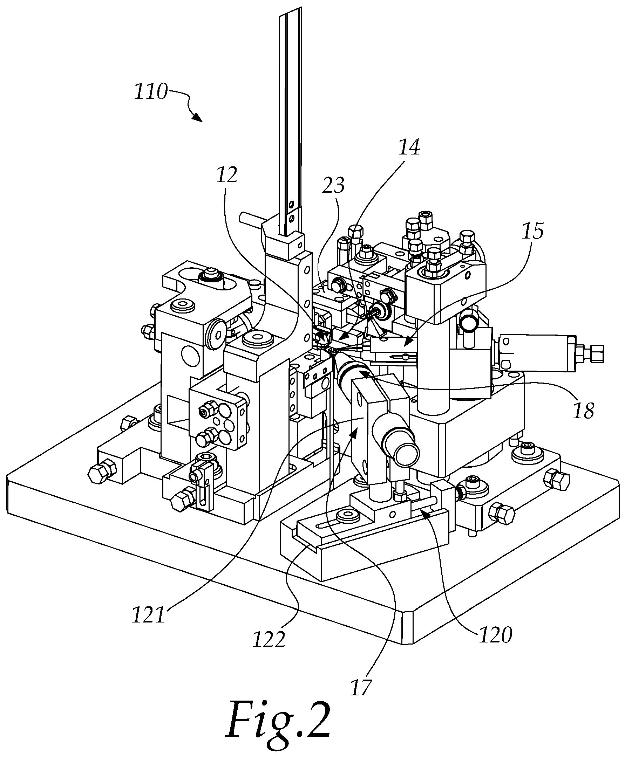

In particular, the machine 10 shown generally in Figure 1 can be used to provide the component 11, while the machine 110 shown in Figure 2 can be used to provide the component 111.

The difference between the two embodiments of the component 11, 111 will become clear in its description.

Enlarged-scale views of the machine 10 of Figure 1 are also shown which illustrate steps of the production of the component.

The machine 10 comprises:
- first handling means 12 adapted at least to pick up a first metallic element 13 and to position it in a welding station 14,
- second handling means 15 adapted at least to pick up a second element 16, 116, also made of metal, and to arrange it in said welding station 14, in contact with the first element 13,
- means 17 for welding the first element 13 with the second element 16, 116, in the welding station 14, so as to provide the component 11, 111.

The welding means 17 comprise a laser device 18 adapted to provide a laser weld for joining the first element and the second element 13 and 16, 116. Said joining is provided exclusively with the material of said first element 13 and said second element 16 or 116.

The first element 13 is constituted by a C-shaped shell which is open at its ends and is provided with a slot in the outer part, not visible in the accompanying figures. Moreover, the second element 16, 116 is welded on the outer part of the first element 13.

In the first embodiment of the component 11, shown in Figure 7, the second element, designated by the reference numeral 16, is constituted by a band which is bent into a U-shape and the welding with the first element 13 is performed at the free ends of the band.

In the second embodiment of the component 111, shown in Figure 8, the second element, designated by 116, is instead constituted by an annular link.

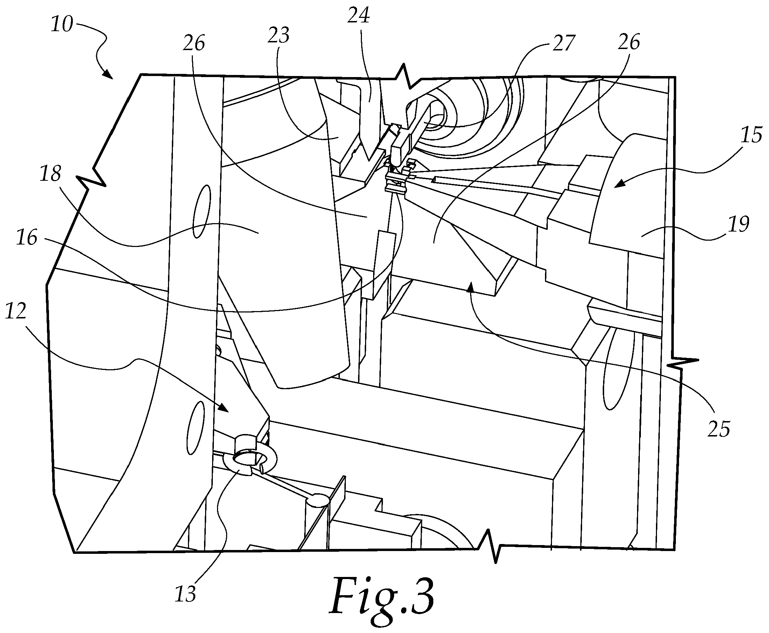

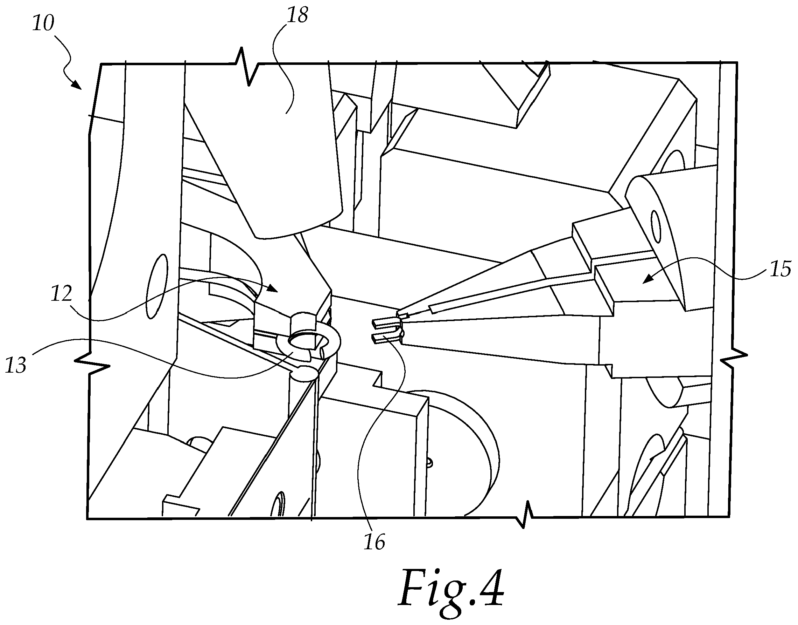

The above-mentioned means are also shown in Figures 3 to 6 for the machine 10.

In particular, the first handling means 12 consist of a pair of grippers for carrying the first element 13, which are adapted to translate forward together toward the welding station and to retract from it, as can be seen by comparing the sequence of figures, in order to pick up a subsequent first element 13 from a magazine.

The second handling means 15 also consist of a pair of grippers for carrying the second element 16, 116, which are adapted to rotate on a support 19 in order to move it from a forming station to the welding station 14.

Either the first handling means 12 or the second handling means 15, the latter in the examples shown, are adapted to rotate the component 11 or 111 in the welding station 14.

In particular, in the first embodiment of the machine 10 said second handling means 15 perform a rotation through 180° of the component 11 to allow welding in the contact points on the two opposite faces, at the two ends of the band.

In the second embodiment of the machine 110, the second handling means 15 perform a rotation to allow the welding between the two elements in the contact point with two or four laser pulses respectively at 180° or 90° to each other.

The machine, in both embodiments 10, 110, comprises means 20, 120 for the movement of the laser device 18. These means comprise, in the first embodiment of the machine 10, where they are designated by the reference numeral 20, a support 21 for the laser device 18 with which it is adapted to slide on a preferably arc-like guide 21.

In the second embodiment of the machine 110, the movement means are designated by 120 and comprise a support 121 for the laser device 18, with which it is adapted to rotate about a vertical axis and to slide on a rectilinear guide 122.

The machine 10 and 110 also comprises a magazine of first elements 13, from which the first handling means 12 are adapted to pick up a single first element 13 in order to bring it to the welding station 14.

The second element 16, 116 is provided in the same machine 10, 110 in a step that precedes the welding step. In fact, there are means 23 for feeding a wire, not shown in detail and of a per se known type, means 24 for cutting the wire (which consist of a blade that descends vertically onto the wire to be cut) and means 25 for stamping the wire so as to create the second element 16, 116.

The stamping means 25, shown in Figure 3, are of a per se known type and consist of a pair of clamps 26 and a punch 27, adapted to close the wire in a U-like shape, in order to provide the band of the second element 16, or in an annular shape, for the second element 116.

In both cases, as shown in Figures 7 and 8, the component for spring ring 10, 110 comprises the first metallic element 13 having a substantially annular shape, as anticipated constituted by a C-shaped shell open at its ends and, joined thereto by laser welding, the second metallic element 16, 116 so as to constitute a link. The closure with a link is per se already present in the first embodiment for the ring-like shape of the second element 116, and is instead determined by the welding in the second embodiment.

The first element 13 and the second element 16, 116 are joined with a connecting region constituted exclusively by their own material, which is provided by the melting thereof with the welding process.

Such connecting region has, with respect to the components provided by welding with added material, a surface continuity with the two elements, the first one 13 and the second one 16, 116.

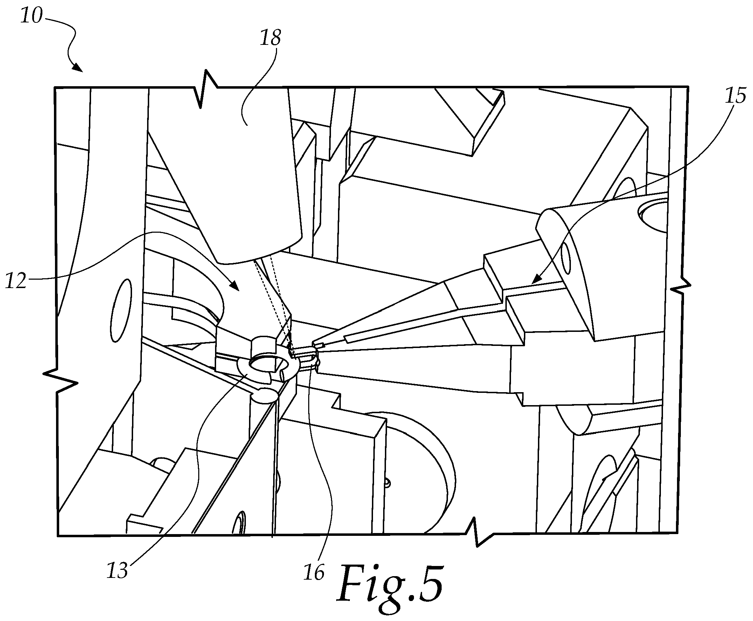

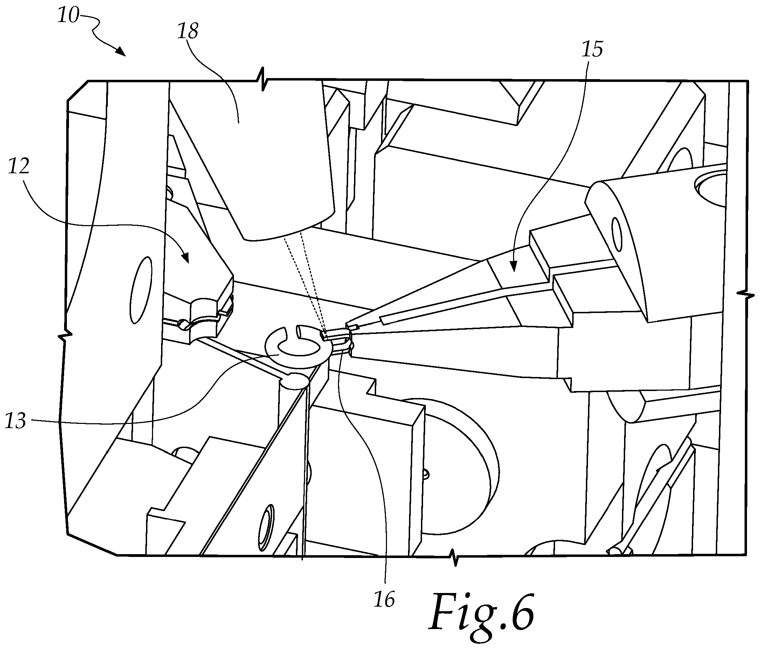

The method for providing the component 11 or 111, in the first or second embodiment, by means of the machine, respectively 10 or 110, consists in:
- picking up and positioning the first metallic element 13 in the welding station 14 by means of the first handling means 12 (Figures 3, 4, and 5),
- forming a second element 16, 116, by means of the stamping means 25 (Figure 3),
- picking up and positioning the second element 16, 116 in the welding station 14 in contact with the first element 13 (Figures 3, 4, and 5),
- joining by laser welding the two elements, the first one 13 and the second one 16, 116 (Figures 5 and 6).

Optionally, the second handling means 15, after a first welding pulse (Figure 5), perform a rotation of the second element 16 or 116 and then repeat the welding after the component has rotated (Figure 6). In the rotation, the second handling means 15 rotate the entire component, since the first welding pulse already creates the joining of the two elements.

The use of the machine according to the invention is evident from what has been described and shown and in particular it is evident that the use of the laser to weld the two elements does not require welding alloy, consequently excluding waste to be refined. Any waste of material can be simply remelted.

Also, it is important to note that the use of a laser for welding reduces production times, thanks to the higher welding speed compared with welding with added material.

It should also be noted that the use of laser welding excludes, due to the absence of combustion, the phenomena of oxidation, thermal distortions of the component, the need to adjust a flame as a function of the environmental conditions, and gives a uniform result among all the components produced.

The use of the machine according to the invention therefore limits the necessary post-welding operations and, consequently, the associated times and costs.

Moreover, it should be noted that, by virtue of the use of laser welding, additional equipment and associated maintenance are not necessary.

Furthermore, laser welding provides a more uniform and precise result in the connection region, while maintaining an apparent shape similar to that of components provided in a known manner.

In practice it has been found that the invention achieves the intended aim and objects, providing a machine for providing a component for spring rings with a greater production than machines of the known type, and by virtue of which to provide components without waste of material to be refined in steps following welding.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine (10, 110) for providing a component (11, 111) for spring rings, which comprises:
- a welding station (14),
- first handling means (12) adapted at least to pick up a first metallic element (13) and to position it in the welding station (14), whereby the first handling means (12) consist of a pair of grippers,
- second handling means (15) adapted at least to pick up a second metallic element (16, 116) and to arrange it in said welding station (14), whereby the second handling means (15) consist of a pair of grippers,
- means (17) for welding said first element (13) with said second element (16, 116), in said welding station (14), so as to provide said component (11, 111),
whereby said welding means (17) comprise a laser device (18) adapted to provide a laser weld for joining said first element (13) and said second element (16, 116), said joining being provided exclusively with the material of said first element (13) and said second element (16, 116), **characterized in that** the machine (10, 110) comprises means (23) for feeding a wire, means (24) for cutting said wire and means (25) for stamping said wire so as to create said second element (16, 116).

2. The machine according to claim 1, **characterized in that** it comprises means (20, 120) for the movement of said laser device (18).

3. The machine according to one or more of the preceding claims, **characterized in that** it comprises a magazine of first elements, from which said first handling means (12) are adapted to pick up a said first element (13).

4. The machine (10, 110) according to any one of claims 1-3, comprising a first metallic element (13) having a substantially annular shape, a second metallic element (16, 116) configured to be joined with a connecting region constituted exclusively by their own material.

5. The machine (10, 110) according to claim 4 whereby said first element (13) is constituted by a C-shaped shell which is open at least at the ends, said second element (16, 116) is configured to being welded on the outer part thereof.

6. The machine (10, 110) according to any of claims 4-5, whereby said said second element (16) is constituted by an annular link.

7. The machine (10, 110) according to any of claims 4-6, whereby said second element (116) is constituted by a band which is bent into a U-shape.

8. A method of providing a component (11, 111) for spring rings, which consists in:
- positioning a fist metallic element (13) in a welding station (14) of a machine (10, 110) according to claims 4-7.
- positioning a second metallic element (16, 116) in said welding station (14) in contact with said first element (13).
- joining by laser welding said first element (13) and said second element (16, 116),
**characterized in that**
- the second metallic element (16, 116) is provided in the same machine, in a step that precedes the welding step, and which comprises feeding a wire, cutting the wire, and stamping the wire.

## Patentansprüche

1. Eine Maschine (10, 110) zur Bereitstellung einer Komponente (11, 111) für Federringe, die Folgendes umfasst:
- eine Schweißstation (14),
- erste Handhabungsmittel (12), ausgebildet, um ein erstes Metallelement (13) aufzunehmen und in die Schweißstation (14) zu platzieren, wobei die ersten Handhabungsmittel (12) aus einem Paar von Greifelementen bestehen,
- zweite Handhabungsmittel (15), mindestens ausgebildet, um ein zweites Metallelement (16, 116) aufzunehmen und in die Schweißstation (14) zu platzieren, wobei die zweiten Handhabungsmittel (15) aus einem Paar von Greifelementen bestehen,
- Mittel (17) zum Verschweißen des ersten Elements (13) mit dem zweiten Element (16, 116) in der Schweißstation (14), um die Komponente (11, 111) bereitzustellen,
wobei die Schweißmittel (17) ein Lasergerät (18) umfassen, ausgebildet, um eine Laserschweißung zum Verbinden des ersten Elements (13) und des zweiten Elements (16, 116) durchzuführen, wobei das Verbinden ausschließlich mit dem Material des ersten Elements (13) und des zweiten Elements (16, 116) vorgenommen wird; **dadurch gekennzeichnet, dass** die Maschine (10, 110) Mittel (23) zum Zuführen eines Drahts, Mittel (24) zum Schneiden des Drahts und Mittel (25) zum Stanzen des Drahts, um das zweite Element (16, 116) herzustellen, umfasst.

2. Die Maschine gemäß Anspruch 1, **dadurch gekennzeichnet, dass** sie Mittel (20, 120) zum Bewegen des Lasergeräts (18) umfasst.

3. Die Maschine gemäß einem oder mehreren der obigen Ansprüche, **dadurch gekennzeichnet, dass** sie ein Magazin erster Elemente umfasst, aus dem die ersten Handhabungsmittel (12) das erste Element (13) aufzunehmen ausgebildet sind.

4. Die Maschine (10, 110) gemäß einem beliebigen der Ansprüche 1-3, die ein erstes Metallelement (13) im Wesentlichen mit einer Ringform und ein zweites Metallelement (16, 116) hat, ausgebildet, um mit einem Verbindungsbereich verbunden zu werden; ausschließlich aus ihrem eigenen Material bestehend.

5. Die Maschine (10, 110) gemäß Anspruch 4, worin das erste Element (13) in einer C-förmigen Schale besteht, die zumindest an den Enden offen ist, wobei das zweite Element (16, 116) ausgebildet ist, um am äußeren Teil davon angeschweißt zu werden.

6. Die Maschine (10, 110) gemäß einem beliebigen der Ansprüche 4-5, worin das zweite Element (16) in einer Ringverbindung besteht.

7. Die Maschine (10, 110) gemäß einem beliebigen der Ansprüche 4-6, worin das zweite Element (116) in einem Ring besteht, der in eine U-Form gebogen ist.

8. Ein Verfahren zur Bereitstellung einer Komponente (11, 111) für Federringe, das in Folgendem besteht:
- dem Positionieren eines ersten Metallelements (13) in eine Schweißstation (14) einer Maschine (10, 110) gemäß den Ansprüchen 4-7,
- dem Positionieren eines zweiten Metallelements (16, 116) in die Schweißstation (14) in Kontakt mit dem ersten Element (13),
- das Verbinden des ersten Elements (13) und des zweiten Elements (16, 116) durch Laserschweißen,
**dadurch gekennzeichnet, dass**
- das zweite Metallelement (16, 116) in derselben Maschine in einem Schritt bereitgestellt wird, der dem Schweißschritt vorausgeht und der das Zuführen eines Drahts, Schneiden des Drahts und Stanzen des Drahts umfasst.

## Revendications

1. Machine (10, 110) pour fournir un composant (11, 111) pour des bagues à ressort, qui comprend :
- un poste de soudage (14),
- des premiers moyens de manipulation (12) adaptés au moins pour saisir un premier élément métallique (13) et le positionner dans le poste de soudage (14), où les premiers moyens de manipulation (12) étant constitués d'une paire de pinces,
- des seconds moyens de manipulation (15) adaptés au moins pour saisir un second élément métallique (16, 116) et pour le disposer dans ledit poste de soudage (14), où les seconds moyens de manipulation (15) consistant en une paire de pinces,
- des moyens (17) pour souder ledit premier élément (13) avec ledit deuxième élément (16, 116), dans ladite station de soudage (14), de manière à former ledit composant (11, 111),
où lesdits moyens de soudage (17) comprenant un dispositif laser (18) adapté pour réaliser une soudure au laser afin d'assembler ledit premier élément (13) et ledit
deuxième élément (16, 116), ledit assemblage étant réalisé exclusivement avec le matériau dudit premier élément (13) et dudit deuxième élément (16, 116), **caractérisée en ce que** la machine (10, 110) comprend des moyens (23) pour alimenter un fil, des moyens (24) pour couper ledit fil et des moyens (25) pour estamper ledit fil de manière à créer ledit deuxième élément (16, 116).

2. La machine selon la revendication 1, **caractérisée en ce qu'**elle comprend des moyens (20, 120) pour le déplacement dudit dispositif laser (18).

3. La machine selon l'une ou plusieurs des revendications précédentes, **caractérisée en ce qu'**elle comprend un magasin de premiers éléments, à partir duquel lesdits premiers moyens de manipulation (12) sont adaptés pour prélever un dit premier élément (13) .

4. La machine (10, 110) selon l'une quelconque des revendications 1 à 3, comprenant un premier élément métallique (13) ayant une forme sensiblement annulaire, un deuxième élément métallique (16, 116) configuré pour être assemblé avec une zone de jonction constituée exclusivement de leur propre matériau.

5. La machine (10, 110) selon la revendication 4, où ledit premier élément (13) est constitué d'une coque en forme de C ouverte au moins aux extrémités, ledit deuxième élément (16, 116) étant configuré pour être soudé sur la partie extérieure de celle-ci.

6. La machine (10, 110) selon l'une quelconque des revendications 4 à 5, où ledit deuxième élément (16) est constitué d'un maillon annulaire.

7. La machine (10, 110) selon l'une quelconque des revendications 4 à 6, où ledit deuxième élément (116) est constitué d'une bande pliée en forme de U.

8. Procédé permettant de fournir un composant (11, 111) pour des bagues à ressort, qui consiste à :
- positionner un premier élément métallique (13) dans un poste de soudage (14) d'une machine (10, 110) selon les revendications 4 à 7,
- positionner un deuxième élément métallique (16, 116) dans ledit poste de soudage (14) en contact avec ledit premier élément (13),
- assembler par soudage laser ledit premier élément (13) et ledit deuxième élément (16, 116),
**caractérisé en ce que**
- le deuxième élément métallique (16, 116) est préparé dans la même machine, au cours d'une étape qui précède l'étape de soudage, et qui comprend l'alimentation d'un fil, la coupe du fil et l'estampage du fil.
